(19) Europäisches Patentamt
European Patent Office
Office européen des brevets

(11) Veröffentlichungsnummer: **0 312 825 B1**

# (12) EUROPÄISCHE PATENTSCHRIFT

(45) Veröffentlichungstag der Patentschrift: **02.02.94**

(51) Int. Cl.$^5$: **C08G 77/62**

(21) Anmeldenummer: **88116370.3**

(22) Anmeldetag: **04.10.88**

## (54) Polymere Hydridochlorsilazane und Verfahren zu ihrer Herstellung.

(30) Priorität: **06.10.87 DE 3733727**

(43) Veröffentlichungstag der Anmeldung:
**26.04.89 Patentblatt 89/17**

(45) Bekanntmachung des Hinweises auf die Patenterteilung:
**02.02.94 Patentblatt 94/05**

(84) Benannte Vertragsstaaten:
**BE CH DE FR GB IT LI SE**

(56) Entgegenhaltungen:
**EP-A- 209 472**
**EP-A- 0 235 486**
**US-A- 4 482 669**

**PATENT ABSTRACTS OF JAPAN Band 10, Nr.239(C-367)(2295), 19.08.1986 &JP-A-6172026**

(73) Patentinhaber: **HOECHST AKTIENGESELLSCHAFT**

**D-65926 Frankfurt(DE)**

(72) Erfinder: **Gerdau, Thomas, Dr.**
**Königsteiner Strasse 17**
**D-6239 Eppstein/Taunus(DE)**
Erfinder: **Kleiner, Hans-Jerg, Dr.**
**Alkönigstrasse 11a**
**D-6242 Kronberg/Taunus(DE)**
Erfinder: **Peuckert, Marcellus, Dr.**
**Platanenweg 8**
**D-6238 Hofheim am Taunus(DE)**
Erfinder: **Brück, Martin**
**Haneckstrasse 17**
**D-6238 Hofheim am Taunus(DE)**
Erfinder: **Aldinger, Fritz, Dr.**
**Barbarossastrasse 44**
**D-6458 Rodenbach(DE)**

EP 0 312 825 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue polymere Hydridochlorsilazane sowie ein Verfahren zu ihrer Herstellung. Die erfindungsgemäßen polymeren Hydridochlorsilazane können durch Umsetzung mit Ammoniak in polymere Hydridosilazane ("Polyhydridosilazane") umgewandelt werden, die ihrerseits zu Siliziumnitrid enthaltendem keramischen Material pyrolysiert werden können.

Die Pyrolyse von Polysilazanen zu Siliziumnitrid enthaltendem keramischen Material wurde bereits in der Literatur (R.R. Wills et al., Ceramic Bulletin, Vol. 62 (1983), 904-915) beschrieben.

Zur Herstellung von Polysilazanen werden in der Regel Chlorsilane als Ausgangsmaterialien eingesetzt und diese mit Ammoniak, primären oder sekundären Aminen umgesetzt (US-PS 4 540 803, US-PS 4 543 344, US-PS 4 595 775, US-PS 4 397 828, US-PS 4 482 669). Nach US-PS 4 482 669 wird ein Dichlorhydridoalkylsilan der Formel $RSiHCl_2$ mit $NH_3$ zu Oligohydridoalkylsilazanen $(RSiHNH)_n$ umgesetzt und diese dann, z.B. mit Hilfe von KH unter Wasserstoffeliminierung zu Polysilazanen kondensiert.

EP-A-235 486 beschreibt die umsetzung von Trichlorsilanen mit Oligosilazanen zu Polyhydridochlorsilazanen, die dann mit $NH_3$ zu Polyhydridosilazanen umgesetzt werden. Dichlorsilane werden als ungeeignet für diesen Zweck hingestellt. Nach EP-A-209 472 werden Oligosilazane durch bloßes Erhitzen in Polyhydridosilazane umgewandelt.

Die vorliegende Erfindung stellt neue Ausgangsmaterialien für Polyhydridosilazane zur Verfügung, nämlich polymere Hydridochlorsilazane.

Ein Gegenstand der vorliegenden Erfindung ist ein Verfahren zur Herstellung von polymeren Hydridochlorsilazanen, dadurch gekennzeichnet, daß man Oligohydridoalkylsilazane der allgemeinen Formel $(R^1SiHNH)_n$, worin n etwa 3 bis 12 ist und $R^1$ eine Alkylgruppe mit 1 bis 6 C-Atomen bedeutet, mit einem Dichlorhydridoalkylsilan der allgemeinen Formel $R^2SiHCl_2$, worin $R^2$ eine Alkylgruppe mit 1 bis 6 C-Atomen bedeutet, bei 30 bis 300 °C umsetzt. Es werden dabei leichtflüchtige Nebenprodukte gebildet. Diese Nebenprodukte werden während der Reaktion entfernt.

Die als Ausgangsprodukte eingesetzten Oligohydridoalkylsilazane $(R^1SiHNH)_n$, mit n etwa gleich 3 bis etwa gleich 12, können dadurch erhalten werden, daß man ein Dichlorhydridoalkylsilan der Formel $R^1SiHCl_2$, wobei $R^1$ die obige Bedeutung hat, mit überschüssigem $NH_3$ in einem Lösungsmittel umsetzt, wie in US-PS 4 482 669 beschrieben (siehe dort insbesondere Spalten 4, 5, 7, 8). Dabei entsteht im allgemeinen ein Gemisch linearer und cyclischer Oligomerer mit verschiedenen Kettenlängen n.

Die Reste $R^1$ und $R^2$ in den Oligohydridoalkylsilazanen $(R^1SiHNH)_n$ (im folgenden auch kurz "Oligosilazane" genannt) bzw. im Dichlorhydridoalkylsilan $R^2SiHCl_2$ (im folgenden auch kurz "Dichloralkylsilan" genannt) können gleich oder verschieden sein, vorzugsweise haben sie 1 bis 3 C-Atome.

Besonders bevorzugt ist es, daß $R^1 = R^2 = CH_3$ ist. Vorzugsweise beträgt das molare Verhältnis der Reaktanten bei der obigen Umsetzung Dichloralkylsilan: $R^1SiHNH$-Einheit des Oligosilazans etwa 0,2 : 1 bis 1,5 : 1, insbesondere 0,3 : 1 bis 1 : 1.

Zur Umsetzung der Reaktanten miteinander werden vorzugsweise die Oligosilazane vorgelegt und das Dichloralkylsilan zugegeben. Da die Reaktion exotherm ist, wird beim Zusammengeben der Reaktanten vorzugsweise zunächst die Temperatur bei 30 bis 50 °C gehalten. Anschließend erhitzt man auf Temperaturen von 100 bis 300 °C, vorzugsweise auf 120 bis 250 °C.

Die als Nebenprodukte gebildeten Leichtsieder, wie $RSiHCl_2$, $RSiCH_2$, $RSiCl_3$, HCl, $H_2$, $NH_3$ (wobei R = $R^1$ oder $R^2$ ist), entweichen während der Reaktion teilweise. Nach beendeter Umsetzung werden die restlichen Leichtsieder im allgemeinen durch Anlegen von Vakuum aus dem Reaktionsgefäß entfernt.

Das bei der Reaktion ebenfalls entstehende $NH_4Cl$ sublimiert im Verlauf der Reaktion zum größten Teil aus dem Reaktionsgemisch ab. Der eventuell verbliebene Rest des $NH_4Cl$ kann durch Extraktion mit einem inerten organischen Lösungsmittel, wie n-Hexan, Toluol, Ether von dem erfindungsgemäß hergestellten polymeren Hydridochlorsilazan abgetrennt werden.

Die Reaktionsdauer richtet sich nach der Geschwindigkeit des Aufheizens und der Reaktionstemperatur. Im allgemeinen genügt eine Reaktionszeit von 5 bis 7 Stunden.

Es ist auch möglich, die Reaktion in einem organischen Lösungsmittel durchzuführen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol oder Ether wie Dibenzylether, Diethylenglykoldiethylether. Bei Verwendung eines Lösungsmittels, in dem das gebildete $NH_4Cl$ unlöslich ist, kann letzteres durch Filtration abgetrennt werden. Die erfindungsgemäßen polymeren Hydridochlorsilazane werden dann durch Abdestillation des Lösungsmittels unter reduziertem Druck erhalten.

Gegebenfalls kann das Verfahren auch unter vermindertem Druck durchgeführt werden. Auch bei Drücken im Bereich von 1 bis 10 Atmosphären kann gearbeitet werden.

Das Verfahren kann auch kontinuierlich gestaltet werden.

Die hergestellten neuen polymeren Hydridochlorsilazane haben eine molekulare Struktur, die durch die Formel

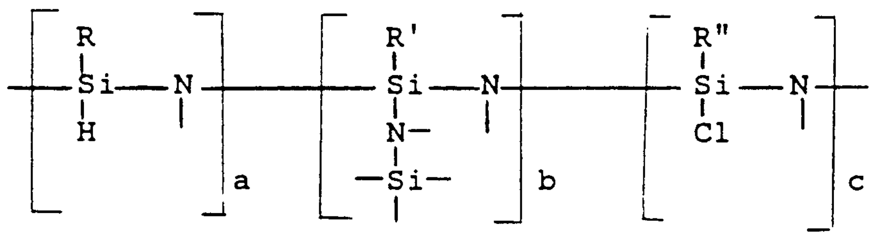

wiedergegeben werden kann, wobei die freien Valenzen an den Stickstoffatomen mit H-Atomen oder Silylresten R*SiXN< (X = H, Cl oder N<) abgesättigt sind. R, R', R'', R* bedeuten dabei Alkylgruppen mit 1 bis 6, vorzugsweise 1 bis 3 C-Atomen, und a, b, c bedeuten die Molfraktionen der jeweiligen Struktureinheiten. Es ist a + b + c = 1. Besonders bevorzugt ist R = R' = R'' = R* = $CH_3$. Die polymeren Hydridochlorsilazane haben eine netzartige Struktur.

Die Werte der Molfraktionen b und c sind umso höher (und entsprechend der Wert von a umso niedriger), je größer das Verhältnis Dichloralkylsilan: $R^1SiHNH$-Einheit des Oligosilazans ist. Die jeweils vorliegenden Werte von a, b, c können durch Integration der $^1H$-NMR-Spektren und durch die Elementaranalyse ermittelt werden. Im allgemeinen liegen die Werte a, b, c, bei 0,1 bis 0,8, wobei a + b + c = 1 ist. Bevorzugt sind solche polymeren Hydridochlorsilazane, bei denen die Werte für a und b bei 0,1 bis 0,5 liegen, insbesondere bei 0,2 bis 0,4. Die bevorzugten Werte für c liegen bei 0,1 bis 0,6, insbesondere bei 0,3 bis 0,6. Diese Werte lassen sich wie gesagt über den relativen Anteil des Dichloralkylsilans im Reaktionsgemisch einstellen und über die genannten Analysenmethoden kontrollieren. Die eben genannten bevorzugten Werte für a, b, c haben sich besonders bewährt, wenn als Endprodukt der Pyrolyse (nach Umwandlung der polymeren Hydridochlorsilazane in Polyhydridosilazane) eine Faser hergestellt werden soll.

Ein weiterer Gegenstand der Erfindung sind polymere Hydridochlorsilazane, dadurch hergestellt, daß man Oligohydridoalkylsilazane der allgemeinen Formel $(R^1SiHNH)_n$, worin n etwa 3 bis etwa 12 ist und $R^1$ eine Alkylgruppe mit 1 bis 6 C-Atomen bedeutet, mit einem Dichlorhydridoalkylsilan der allgemeinen formel $R^2SiHCl_2$, worin $R^2$ eine Alkylgruppe mit 1 bis 6 C-Atomen bedeutet, bei 30 bis 300 °C umsetzt. Die dabei gebildeten leichtflüchtigen Nebenprodukte werden während der Reaktion entfernt.

Die neuen polymeren Hydridochlorsilazane (auch "Polyhydridochlorsilazane" genannt) können durch Umsetzung mit Ammoniak ("Ammonolyse") in Polyhydridosilazane überführt werden, die wiederum durch Pyrolyse in Siliziumnitrid enthaltendes keramisches Material umgewandelt werden können.

Die Ammonolyse kann in flüssigem $NH_3$ erfolgen. Es ist jedoch vorteilhaft, sie in einem organischen Lösungsmittel durchzuführen. Geeignet sind alle Lösungsmittel, die sich inert gegenüber den Polyhydridochlorsilazanen verhalten. Bevorzugt sind solche Lösungsmittel, in denen das als Nebenprodukt anfallende Ammoniumchlorid geringe Löslichkeit und gute Abtrennbarkeit aufweist, z.B. Ether, aliphatische und aromatische Kohlenwasserstoffe, chlorierte Kohlenwasserstoffe. Die Reaktanten können bei der Ammonolyse in beliebiger Reihenfolge in das Reaktionsgefäß eingespeist werden. Es ist jedoch zumeist vorteilhaft, das Polyhydridochlorsilazan in Lösung vorzulegen und gasförmigen Ammoniak einzuleiten oder flüssigen Ammoniak hinzuzufügen. Wurden die erfindungsgemäßen Polyhydridochlorsilazane in einem geeigneten organischen Lösungsmittel hergestellt, so kann die Ammonolyse ohne vorherige Abtrennung des $NH_4Cl$ in diesem Lösungsmittel durchgeführt werden. Die Ammonolyse wird vorzugsweise mit einem Überschuß $NH_3$ durchgeführt, um sicher zu gehen, daß die Reaktion vollständig ist und die Endprodukte möglichst weitgehend chlorfrei sind. Im allgemeinen reicht für diesen Zweck die doppelte stöchiometrische Menge.

Im allgemeinen wird bei einer Temperatur von etwa -50 bis +100 °C gearbeitet, vorzugsweise bei -20 bis +30 °C, insbesondere bei Raumtemperatur (wobei mit Eis gekühlt wird). Es ist jedoch auch möglich, oberhalb Raumtemperatur, z.B. bei der Siedetemperatur des verwendeten Lösungsmittels, oder unterhalb Raumtemperatur, z.B. bei -33 °C bei der Verwendung von flüssigem $NH_3$ zu arbeiten.

Nach beendeter Ammonolyse wird ggf. das überschüssige $NH_3$ entfernt und das angefallene Ammoniumchlorid abfiltriert. Zur Erhöhung der Ausbeute kann der Niederschlag mit einem der obengenannten organischen Lösungsmittel gewaschen werden. Nach Abdestillation des Lösungsmittels bei vermindertem Druck werden die erfindungsgemäßen Polyhydridosilazane unmittelbar als weiße Pulver erhalten. Die

Polyhydridosilazane sind in den obigen organischen Lösungsmitteln löslich, so daß diese sowohl für das Beschichten von Oberflächen als auch für die Herstellung von Fasern verwendet werden können.

Die Polyhydridosilazane können durch Pyrolyse in inerter Stickstoff- oder Argonatmosphäre bei Temperaturen von 800 bis 1200 °C zu amorphen, dichten Materialien pyrolsiert werden, die im wesentlichen aus Si, N und C bestehen und in Spuren auch H und O enthalten können. Bei Pyrolysetemperaturen oberhalb 1200 °C, etwa im Bereich von 1200 °C bis 1400 °C, entstehen teilamorphe, mikrokristalline keramische Werkstoffe, die als kristalline Phase $\alpha$-$Si_3N_4$ enthalten.

Ein besonderer Vorteil ist, daß sich die Polyhydridosilazane vor der Pyrolyse nach verschiedenen Verfahren zu dreidimensionalen Formkörpern formen lassen.

Eine wichtige Methode der Formgebung ist das Ziehen von Fasern. Dabei lassen sich Fasern aus hochviskosen Lösungen des Polyhydridosilazans in Lösungsmitteln, wie Toluol, THF oder Hexan ziehen. Das Fasernziehen geschieht vorteilhafterweise mittels Spinndüsen von 80 bis 150 µm Durchmesser. Durch anschließendes Strecken wird der Faden verjüngt, so daß nach der Pyrolyse ein sehr fester Faden von 2 bis 20 µm, insbesondere 5 bis 15 µm Durchmesser entsteht. Die durch anschließende Pyrolyse hergestellten Fasern finden Verwendung als mechanische Verstärkungseinlagerungen in faservestärktem Aluminium, Aluminiumlegierungen und Keramikbauteilen.

Eine weitere wichtige Verarbeitungsmöglichkeit der Polyhydridosilazane ist die Herstellung dichter, gut haftender, amorpher oder mikrokristalliner keramischer Beschichtungen auf Metallen, insbesondere Stählen, oder auf Keramiken wie $Al_2O_3$, $ZrO_2$, MgO, SiC oder $Si_3N_4$. Die Beschichtung erfolgt mit Hilfe einer lösung des Polyhydridosilazans in organischen Lösungsmitteln wie Toluol, THF, Hexan. Die pyrolytische Umwandlung in eine amorphe bzw. mikrokristalline Schicht erfolgt im gleichen Temperaturbereich von 800 bis 1200 °C bzw. 1200 bis 1400 °C unter Inertgas wie oben bei dreidimensionalen Formkörpern beschrieben.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Weiter kann man die oben beschriebenen Polyhydridosilazane mit gleichhoher keramischer Ausbeute von 70 bis 90 % statt in Inertgas auch in $NH_3$-Atmosphäre pyrolysieren. Dabei resultiert ein praktisch kohlenstoffreier, glasklarer, farbloser Werkstoff. Bei der Pyrolyse in $NH_3$ bei 1000 °C oder höher liegt der C-Gehalt unterhalb 0,5 Gew.-%. Das Pyrolyseprodukt besteht je nach Pyrolysetemperatur aus praktisch reinem amorphen Siliziumnitrid (Pyrolyse unterhalb 1200 °C) oder kristallinem $Si_3N_4$ (Pyrolyse oberhalb 1200 °C, insbesondere oberhalb 1300 °C). Die Pyrolyse in $NH_3$ läßt sich auf alle nach den oben beschriebenen Formgebungsverfahren hergestellten Formkörper, also aus Pulvern geformte Körper, Fasern, Beschichtungen anwenden.

**Versuchsbericht**

**Herstellung von Oligohydridomethylsilazan $(CH_3SiHNH)_n$**

In 800 ml absolutem THF wurden 100 ml (0,97 mol) Methyldichlorsilan gelöst und für 3 Stunden Ammoniak eingeleitet (Einleitgeschwindigkeit: 0,5 l/min). Durch Kühlen mit einem Eisbad wurde die Reaktionstemperatur im Bereich von 20 bis 25 °C gehalten. Zur Vervollständigung der Reaktion wurde 1 h bei Raumtemperatur gerührt und anschließend unter Argon das Ammoniumchlorid abgetrennt. Der Niederschlag wurde 2mal mit je 350 ml THF gewaschen und die vereinigten THF-Lösungen unter reduziertem Druck eingeengt. Man erhielt ein klares, leicht bewegliches Öl von $(CH_3SiHNH)_n$ in einer Ausbeute von 44,5 g = 78 % der Theorie.

**Beispiele**

**Herstellung des polymeren Hydridochlorsilazans**

**Beispiel 1**

108,8 g (1,84 mol) Oligohydridomethylsilazan wurden bei 30 bis 45 °C mit 176,1 g (1,53 mol) Methyldichlorsilan versetzt und im Ölbad innerhalb von 7 h auf 200 °C erhitzt. Dabei stieg die Innentemperatur von 46 °C auf 164 °C an. Oberhalb von 100 °C setzte ein kräftige Gasentwicklung ein. Nach beendeter Reaktion und Abkühlung erhielt man ein sprödes Harz. Der Gesamtinhalt des Reaktionskolbens betrug 134 g. Das Harz wurde mit 500 ml THF extrahiert, der Rückstand anschließend mit 50 ml n-Hexan gewaschen und die organischen Lösungsmittel im Vakuum abgezogen. Zurück blieben 109 g eines weißen Pulvers der

chemischen Zusammensetzung $C_1H_{3,62}Cl_{0,38}N_{0,8}Si_1$

| Elementaranalyse (Gew.-%): | | | | | |
|---|---|---|---|---|---|
| Gefunden:<br>Berechnet: | 19,1 % Cl;<br>19,7 % Cl; | 39,8 % Si;<br>41,0 % Si; | 16,2 % N;<br>16,4 % N; | 16,5 % C;<br>17,6 % C; | 6,8 % H<br>5,3 % H |
| Molmasse: 1865 g/mol, osmometrisch in Benzol | | | | | |

$^1$H-NMR: (100 MHz,$CDCl_3$,ppm): δ 0,2-0,8 (br,3H,$SiCH_3$), 1,5-1,9 (br,0,1H,NH), 4,5 (br), 4,7-5,0 (br) und 5,1 (br,0,4H,SiH).

IR: (KBr,$cm^{-1}$) : 3380 (sh), 3150 (br,vs), 3050 (s), 2840 (w), 2160 (s), 1410 (vs), 1270 (vs), 1200-950 (br), 900 (br,vs), 760 (br,s).

**Beispiel 2**

11,3 g (190 mmol) Oligohydridomethylsilazan wurden mit 1,55 g (135 mmol) Methyldichlorsilan versetzt. Dabei stieg die Innentemperatur auf 50 °C. Innerhalb von 30 Minuten wurde das Reaktionsgemisch auf eine Innentemperatur von 160 °C erhitzt und 1,5 h bei dieser Tempertur gehalten. Anschließend wurde 4 Stunden bei 180 bis 190 °C Innentemperatur nachgeheizt. Nach dem Abziehen von leichtsiedenden Reaktionsprodukten wurde mit 150 ml n-Pentan der erkaltete Rückstand extrahiert und nach Evaporieren 10,1 g eines weißen, löslichen Pulvers erhalten, das aus Polyhydridochlorsilazan bestand.

| Elementaranalyse (Gew.-%): | | |
|---|---|---|
| 41 % Si | 17,6 % N | 15,3 % Cl |

**Beispiel 3**

10,9 g (184 mmol) Oligohydridomethylsilazan und 17,6 g (153 mmol) Methyldichlorsilan wurden im Ölbad bei einer Badtemperatur von 225 bis 235 °C für 7 Stunden unter Rückfluß gekocht. Bei einer Innentemperatur von 80 °C wurden durch Anlegen von Vakuum Leichtsieder abgezogen. Der Rückstand wurde in 50 ml THF gelöst und filtriert. Nach dem Abziehen des Lösungsmittels verblieben 10,0 g eines weißen, löslichen Pulvers, das aus Polyhydridochlorsilazan bestand.

| Elementaranalyse (Gew.-%): | | |
|---|---|---|
| 34 % Si | 15,9 % N | 22 % Cl |

**Patentansprüche**

**1.** Verfahren zur Herstellung von polymeren Hydridochlorsilazanen, dadurch gekennzeichnet, daß man Oligohydridoalkylsilazane der allgemeinen Formel $(R^1SiHNH)_n$, worin n etwa 3 bis 12 ist und $R^1$ eine Alkylgruppe mit 1 bis 6 C-Atomen bedeutet, mit einem Dichlorhydridoalkylsilan der allgemeinen Formel $R^2SiHCl_2$, worin $R^2$ eine Alkylgruppe mit 1 bis 6 C-Atomen bedeutet, bei 30 bis 300 °C umsetzt, wobei das molare Verhältnis von Dichlorhydridoalkylsilan $R^2SiHCl_2$ zu einer $R^1$SiHNH-Einheit des Oligohydridoalkylsilazans 0,2 : 1 bis 1,5 : 1 beträgt.

**2.** Verfahren zur Herstellung von polymeren Hydridochlorsilazanen, dadurch gekennzeichnet, daß man Oligohydridoalkylsilazane, die durch Reaktion eines Dichlorhydridoalkylsilans $R^1SiHCl_2$ mit $NH_3$ erhalten worden sind, mit einem Dichlorhydridoalkylsilan der allgemeinen Formel $R^2SiHCl_2$ bei 30 bis 300 °C umsetzt, wobei $R^1$ und $R^2$ Alkylgruppen mit 1 bis 6 C-Atomen bedeuten.

**3.** Verfahren nach Anspruch 1 oder 2, dadurch gekennzeichnet, daß $R^1$ und $R^2$ Alkylgruppen mit 1 bis 3 C-Atomen bedeuten.

4. Verfahren nach Anspruch 1 oder 2, dadurch gekennzeichnet, daß $R^1 = R^2 = CH_3$ ist.

5. Verfahren nach einem der Ansprüche 1 bis 4, dadurch gekennzeichnet, daß man beim Zusammengeben der Reaktanten eine Temperatur von 30 bis 50 °C einhält und anschließend auf 100 bis 300 °C erhitzt.

6. Polymere Hydridochlorsilazane, erhältlich nach dem Verfahren gemäß Anspruch 1.

7. Polymere Hydridochlorsilazane, erhältlich nach dem Verfahren gemäß Anspruch 2.

8. Polymere Hydridochlorsilazane, erhältlich nach dem Verfahren gemäß Anspruch 3.

9. Polymere Hydridochlorsilazane, erhältlich nach dem Verfahren gemäß Anspruch 4.

## Claims

1. A process for the preparation of a polymeric hydridochlorosilazane, which comprises reacting an oligohydridoalkylsilazane of the formula $(R^1SiHNH)_n$, in which n is about 3 to 12 and $R^1$ denotes an alkyl group having 1 to 6 carbon atoms, with a dichlorohydridoalkylsilane of the formula $R^2SiHCl_2$, in which $R^2$ denotes an alkyl group having 1 to 6 carbon atoms, at 30 to 300 °C, where the molar ratio of dichlorohydridoalkylsilane $R^2SiHCl_2$ to an $R^1SiHNH$ unit of the oligohydridoalkylsilazane is 0.2 : 1 to 1.5 : 1.

2. A process for the preparation of a polymeric hydridochlorosilazane, which comprises reacting an oligohydridosilazane, which has been obtained by reacting a dichlorohydridoalkylsilane $R^1SiHCl_2$ with $NH_3$ with a dichlorohydridoalkylsilane of the formula $R^2SiHCl_2$ at 30 to 300 °C, $R^1$ and $R^2$ denoting alkyl groups having 1 to 6 carbon atoms.

3. The process according to claim 1 or 2, wherein $R^1$ and $R^2$ denote alkyl groups having 1 to 3 carbon atoms.

4. The process as claimed in claim 1 or 2, wherein $R^1 = R^2 = CH_3$.

5. The process as claimed in any one of claims 1 to 4, wherein a temperature of 30 to 50 °C is maintained when the reactants are brought together and the mixture is then heated to 100 to 300 °C.

6. A polymeric hydridochlorosilazane obtainable by the process as claimed in claim 1.

7. A polymeric hydridochlorosilazane obtainable by the process as claimed in claim 2.

8. A polymeric hydridochlorosilazane obtainable by the process as claimed in claim 3.

9. A polymeric hydridochlorosilazane obtainable by the process as claimed in claim 4.

## Revendications

1. Procédé de préparation d'hydridochlorosilazanes polymères, caractérisé en ce qu'on fait réagir à 30 à 300 °C des oligohydridoalkylsilazanes répondant à la formule générale $(R^1SiHNH)_n$, dans laquelle n est d'environ 3 à 12 et $R^1$ désigne un groupe alkyle en $C_1$-$C_6$, avec un dichlorhydridoalkylsilane répondant à la formule générale $R^2SiHCl_2$, dans laquelle $R^2$ désigne un groupe alkyle en $C_1$-$C_6$, le rapport molaire du dichlorohydridoalkylsilane $R^2SiHCl_2$ à un motif $R^1SiHNH$ de l'oligohydridoalkylsilazane étant de 0,2:1 à 1,5:1.

2. Procédé de préparation d'hydridochlorosilazanes polymères, caractérisé en ce qu'on fait réagir à 30 à 300 °C des oligohydridoalkylsilazanes qui ont été obtenus par réaction d'un dichlorhydridoalkylsilane $R^1SiHCl_2$ avec $NH_3$, avec un dichlorhydridoalkylsilane répondant à la formule générale $R^2SiHCl_2$, $R^1$ et $R^2$ désignant des groupes alkyle en $C_1$-$C_6$.

3. Procédé selon les revendications 1 ou 2, caractérisé en ce que $R^1$ et $R^2$ désignent des groupes alkyle en $C_1$-$C_3$.

4. Procédé selon les revendications 1 ou 2, caractérisé en ce que $R^1 = R^2 = CH_3$.

5. Procédé selon l'une des revendications 1 à 4, caractérisé en ce que lors de l'addition des réactifs, on maintient une température de 30 à 50 °C, puis en ce qu'on chauffe à 100 à 300 °C.

6. Hydridochlorosilazanes polymères, pouvant être obtenus par le procédé selon la revendication 1.

7. Hydridochlorosilazanes polymères, pouvant être obtenus par le procédé selon la revendication 2.

8. Hydridochlorosilazanes polymères, pouvant être obtenus par le procédé selon la revendication 3.

9. Hydridochlorosilazanes polymères, pouvant être obtenus par le procédé selon la revendication 4.